Europäisches Patentamt

European Patent Office

Office européen des brevets

(19)

(11) **EP 0 935 351 A1**

(12) **EUROPEAN PATENT APPLICATION**

(43) Date of publication:
**11.08.1999 Bulletin 1999/32**

(51) Int. Cl.$^6$: **H04B 7/185**

(21) Application number: **98300667.7**

(22) Date of filing: **29.01.1998**

(84) Designated Contracting States:
**AT BE CH DE DK ES FI FR GB GR IE IT LI LU MC NL PT SE**
Designated Extension States:
**AL LT LV MK RO SI**

(71) Applicant: **ICO Services Ltd.**
**London W6 9BN (GB)**

(72) Inventor: **Bains, Navjit Singh**
**Slough, Berkshire, SL3 7PQ (GB)**

(74) Representative:
**Read, Matthew Charles et al**
**Venner Shipley & Co.**
**20 Little Britain**
**London EC1A 7DH (GB)**

(54) **Radio resource management in a mobile satellite telephone system**

(57)     A satellite mobile telephone system operates with a TDMA frame structure which requires Z-arc path delay offsets to achieve correct frame timing. The Z-arcs are contours of constant path delay on the Earth's surface for signals from an orbiting satellite (3a, 3b) and can be used as reference points for mobile user terminals (4a, 4b) to enable the allocation or denial of radio resources to those user terminals which lie on or near the peripheries of the satellite footprint, so as to prevent power overload at the satellite.

Figure 1

## Description

The present invention relates to a method of radio resource management for a satellite mobile telephone system, particularly but not exclusively to methods of allocating or denying radio resources to a mobile user terminal lying on or near the periphery of a satellite's footprint.

Mobile telecommunication systems have been proposed that use satellite communication links between mobile user terminals and conventional terrestrial networks. One network known as the IRIDIUM™ satellite cellular system and described in, for example, EP-A-0 365 885 and US Patent No. 5 394 561 (Motorola), makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed, with an orbital radius in the range of 10-20,000 km; reference is directed to Walker J.G. "Satellite Patterns for Continuous Multiple Whole Earth Coverage" Royal Aircraft Establishment, pp 119-122 (1977). Reference is further directed to the ICO™ satellite cellular system described, for example, in GB-A-2 295 296, and to the ODYSSEY™ satellite cellular system described in EP-A-0 510 789. With these systems, the satellite communication link does not permit communication between adjacent satellites. Instead, a signal from a mobile user terminal such as a mobile handset is directed firstly to the satellite and then to a ground station or satellite access node (SAN), which is connected to a conventional land-based telephone network. This has the advantage that many components of the system are compatible with known digital terrestrial cellular technology such as GSM. Also, simpler satellite communication techniques can be used than with a LEO network.

As well as defining the protocols and procedures required to permit communications between individual user terminals and the rest of the communications network, the satellite system as a whole must be managed to take account of all operational constraints, including the use of shared radio resources common to multiple communications channels. The management of such resources, which include in particular the available spectrum and satellite capacity, is a much more important issue for a satellite system than a terrestrial cellular network, because of the much larger cell size created by spot beams from the satellite, the movement of the cells relative to the Earth, the limited isolation between cells and the need for multiple ground stations to share access to individual cells.

System and resource management covers functions such as traffic planning, spectrum planning and satellite resource planning.

Traffic planning includes, for example, the generation, from historical traffic data, of traffic predictions for each satellite, as well as each satellite beam.

Spectrum planning involves the coordinated use of the available spectrum resources by the satellite constellation and the SANs to optimally meet the traffic predictions. This may involve, for example, the generation, distribution, application and monitoring of system wide frequency plans for the allocation of available spectrum to the satellite constellation.

Satellite resource planning involves the optimisation of satellite resources, including power and bandwidth in the various satellite transponders, which are used for both communications and signalling traffic. An example of satellite resource planning is the decision as to whether to allocate resources to "low elevation" traffic, as explained below.

When a mobile handset is located at the satellite's nadir on Earth, it can be said to "see" the satellite at an elevation of 90°; alternatively, the satellite is said to be at an elevation of 90° to the handset. As the handset moves towards the edge of the satellite's footprint, the communication path length between the handset and the satellite increases, and the handset sees the satellite at decreasing elevations, down to 0° if the satellite provides radio coverage to the horizon. At the same time, the broadcast power required to be produced by the satellite to maintain the communication link with the handset increases with the increase in path length.

Although a satellite may be capable of providing radio coverage down to 0° elevation, it may be desirable for low elevation traffic not to be carried by the satellite, but to be allocated to another satellite in the constellation, if this is available. In particular, when a satellite is heavily loaded, ie. is carrying a large amount of communications traffic, it may not be viable to carry traffic from handsets which see the satellite at low elevations of, for example, 0° to 10°, since the amount of power required to carry such low elevation traffic may drive the satellite into overload.

In a satellite which produces a plurality of beams to cover its footprint, it is possible to deny radio resources to handsets lying on or near to the periphery of the footprint by not allocating resources to any handset located within a particular peripheral beam. However, since such peripheral denial of resources operates on a beam-by-beam basis, it cannot be effectively implemented where the beam pattern is such that a single beam covers a wide range of elevations, for example from 0° to 30°.

The present invention aims to overcome this problem.

According to the present invention, there is provided a method of allocating radio resources to a plurality of mobile user terminals in a satellite mobile telephone system, in which a position of each of the user terminals within the footprint of a given satellite is capable of being classified by reference to one of a plurality of predetermined reference values, each of which represents a path delay for a signal from the given satellite to a point on the Earth's surface, and wherein each reference value is capable of being associated with radio resources to be used by user terminals referenced to that value, comprising selectively denying resources to particular reference values.

Preferably, resources are denied to reference values representing user terminals at a low elevation with respect to the given satellite. The elevation level below which resources are to be denied may be determined by predicting traffic demands for the given satellite.

Preferably, the predetermined reference values comprise Z-arc values.

An advantage of a method according to the invention is that Z-arc values may be used to selectively deny resources to user terminals at low elevations near the periphery of a satellite's footprint, where it would not be possible to produce such peripheral denial by conventional methods where the edge beams from the satellite cover a relatively large range of elevations.

The present invention also provides a method of allocating radio resources to a plurality of mobile user terminals in a satellite mobile telephone system, in which a position of each of the user terminals within the footprint of a given satellite is capable of being classified by reference to one of a plurality of predetermined reference values, each of which represents a path delay of a signal from the given satellite to a point on the Earth's surface, and wherein each reference value is capable of being associated with radio resources to be used by user terminals referenced to that value, comprising selectively allocating resources to particular reference values.

The radio resources may comprise traffic channels, each of which may comprise a carrier frequency and a TDMA time slot allocation.

A method according to the invention may further comprise producing a burst time frequency plan which includes said reference values and their associated radio resources.

Starting from such a burst time frequency plan, a method according to the invention may further comprise, in response to a request for resources from a user terminal, determining the reference value to which the user terminal is to be referenced, selecting from among the resources specified in the burst time frequency plan as being associated with the reference value, and transmitting a signal to the user terminal allocating the selected resources.

In the event that no resources are to be allocated to the particular reference value, the signal may inform the user terminal that no resources are available.

The present invention also provides a satellite mobile telephone system comprising a plurality of orbiting satellites, a plurality of user terminals, means for classifying the position of each of the user terminals by reference to one of a plurality of predetermined reference values, each of which represents a path delay for a signal from a given satellite to a point on the Earth's surface, and means for selectively allocating radio resources to each user terminal according to the reference value by which it is classified.

The present invention alternatively provides a satellite mobile telephone system comprising a plurality of orbiting satellites, a plurality of user terminals, means for classifying the position of each of the user terminals by reference to one of a plurality of predetermined reference values, each of which represents a path delay for a signal from a given satellite to a point on the Earth's surface, and means for selectively denying radio resources to each user terminal according to the reference value by which it is classified.

Embodiments of the present invention will now be described, by way of example, with reference to the accompanying drawings, in which:

Figure 1 is a schematic diagram of the physical components of a satellite mobile telephone system;
Figure 2 shows the beam pattern in the ICO$^{TM}$ satellite mobile telephone system;
Figure 3 is a more detailed diagram of the different types of spot beams in the beam pattern of Figure 2;
Figure 4 shows a mobile user terminal partially cut away;
Figure 5 is a more detailed block diagram of a SAN and the NMC of Figure 1;
Figure 6 shows the general principle of the TDMA based communication system used in the ICO$^{TM}$ satellite mobile telephone system;
Figure 7 shows the position of the Z-arcs and delay classes in relation to the beam types;
Figure 8 shows details of the TDMA frame structure at the user terminals;
Figure 9 shows an edge beam with its associated angles of elevation and Z-arcs; and
Figure 10 shows the general structure of a burst time frequency plan (BTFP).

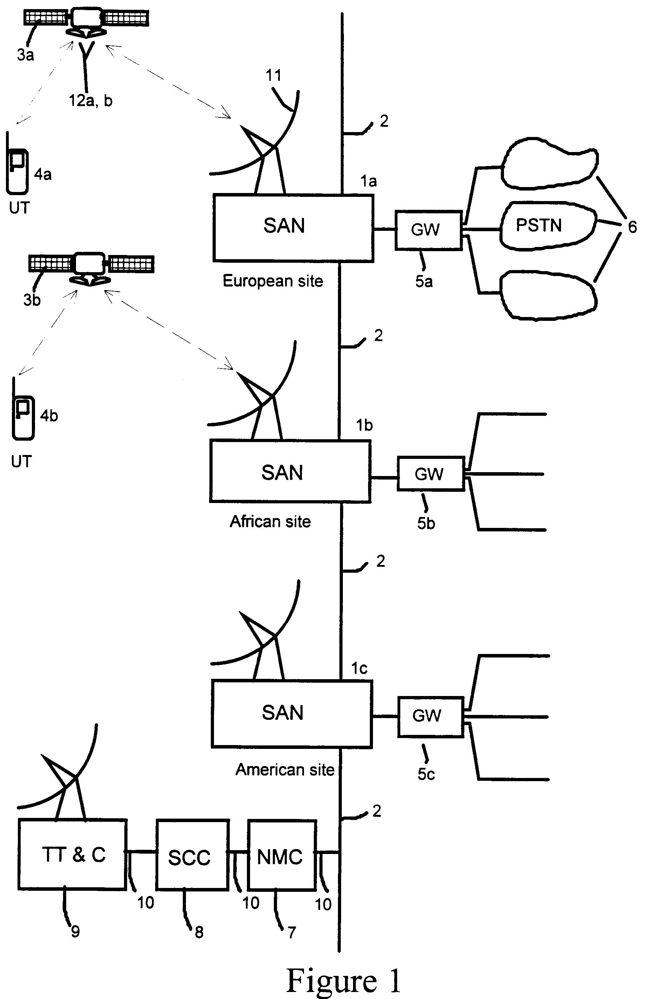

Referring to Figure 1, a satellite mobile telephone system comprises a plurality of satellite access nodes (SAN) 1a, 1b, 1c interconnected by a high capacity digital network 2 ("the backbone network"), a plurality of satellites 3a, 3b, a plurality of user terminals (UT) 4a, 4b, gateways (GW) 5a, 5b, 5c providing connections between the SANs 1a, 1b, 1c and other networks 6, a network management centre (NMC) 7, a satellite control centre (SCC) 8 and a tracking, telemetry and control station (TT&C) 9. The NMC 7, the SCC 8 and the TT&C 9 are interconnected by a lower capacity digital network 10 which is also connected to the backbone network 2. The other networks 6 comprise the public switched telephone network (PSTN), terrestrial cellular telephone networks and the like.

The SCC 8 and the TT&C 9 control the operation of the satellites 3a, 3b, for instance setting transmit power levels and transponder input tuning, as directed by the NMC 7. Telemetry signals from the satellites 3a, 3b are received by the TT&C 9 and processed by the SCC 8 to ensure that the satellites 3a, 3b are functioning correctly.

During a telephone call, a UT 4a, 4b communicates with SAN 1a, 1b via the satellites 3a, 3b using a TDMA scheme over a link comprising a downlink channel and an uplink channel. The channels comprise TDMA time slots on frequencies allocated on initiation of the call or re-allocated during a call.

The satellite network is designed to provide worldwide coverage, so the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by a UT all of the time and two satellites can be accessed for at least 80% of the time, thereby providing system diversity. Further satellites may be included in the constellation in order to provide additional redundancy and diversity.

The satellites are typically arranged in a medium earth orbit (MEO) constellation, for example with an orbital radius of 10,355 km, although the invention is not restricted to a particular orbital radius. In this embodiment, satellites 3a, 3b are shown in a common orbit and are tracked by the antenna arrangement 11 of each SAN 1a, 1b, 1c. Typically, each SAN includes four antennas for tracking individual satellites of the constellation, with one spare antenna. The SANs are spaced around the earth in order to provide continuous coverage. In the embodiment shown, SAN 1a may be located in Europe whereas SAN 1b may be located in Africa, SAN 1c in America and other SANs may be located elsewhere. In Figure 1, the SAN 1b is shown communicating with user terminal UT 4b via satellite 3b. For further details of the satellite network, reference is directed to GB-A-2 295 296.

The satellites 3a, 3b are in non-geostationary orbits and comprise generally conventional satellites, such as the known Hughes HS601 model, which have a plurality of satellite transponders including forward and return link communications transponders 12a, 12b, and which may further include features as disclosed in GB-A-2 288 913. Each satellite 3a, 3b is arranged to generate an array of beams, one for each cell, covering a footprint beneath the satellite, each beam including a number of different frequency channels and time slots.

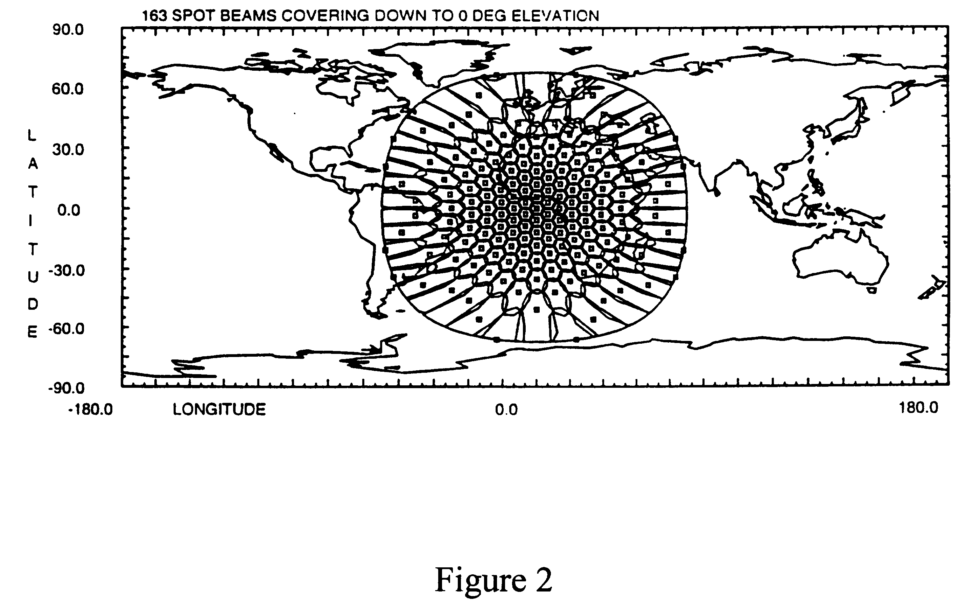

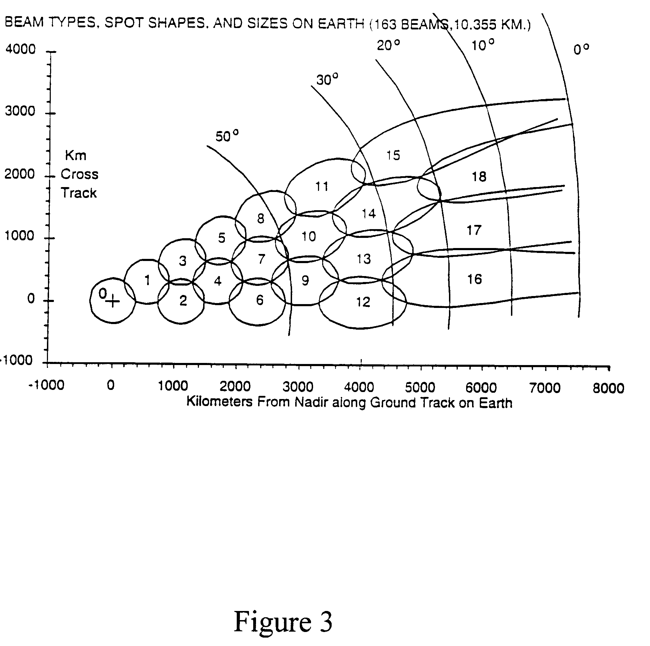

Referring to Figure 2, in the ICO[TM] satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3. It is apparent from Figure 3 that certain of the edge beams (15, 16) produced by each satellite can extend from 0° to in excess of 30° elevation. It is therefore not possible to selectively perform peripheral denial of radio resources to a UT 4a, 4b seeing a satellite 3a, 3b at low elevations, for example 0° to 10°, on a beam-by-beam basis.

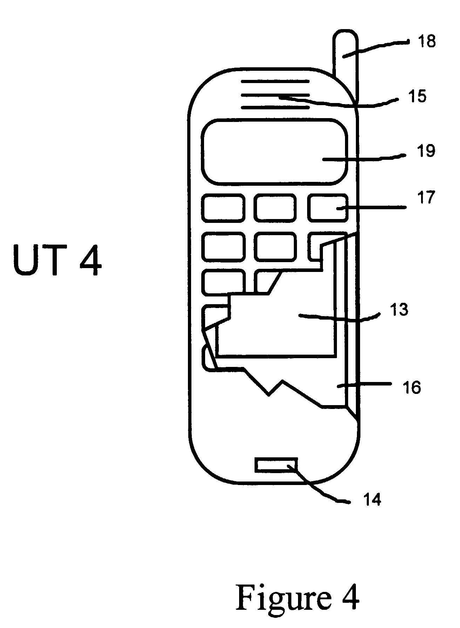

A UT 4a, 4b is shown in more detail in Figure 4 and is generally similar to the units presently available for GSM networks. It comprises a codec (not shown), a controller 13, a microphone 14, a loudspeaker 15, a battery 16, a keypad 17, a radio frequency interface (not shown), an antenna 18, a display 19 and a subscriber identification module (SIM) smart card (not shown).

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The controller 13 comprises a microprocessor and RAM and ROM memory. The microprocessor operates in accordance with a control program stored in the ROM memory. The controller can exchange control and telemetry data with a SAN 1a, b, c using the radio frequency interface.

The SIM includes a processor and a non-volatile memory which stores data identifying the subscriber and data for use in encrypted communication, as well as information relating to system operation, for example, a set of system reference frequencies.

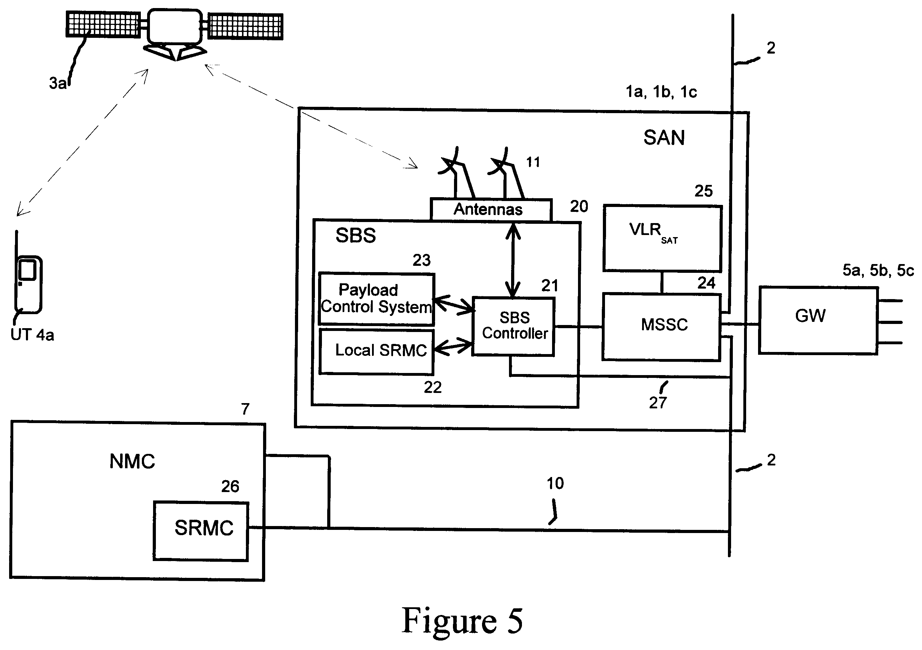

Referring to Figure 5, the configuration of a SAN 1a, 1b, 1c and the NMC 7 is shown in more detail. Each SAN 1a, 1b, 1c consists of a satellite base station SBS 20 which is coupled to the plurality of dish antennas 11 for tracking the satellites 3a, 3b. The SBS 20 comprises an SBS Controller 21 which controls the antennas 11 and which is coupled to a Local Satellite Resource Management Centre (Local SRMC) 22. In some SBSs, the SBS 20 is also coupled to a Payload Control System (PCS) 23. Typically a PCS 23 exists in half of the SBSs in a system. A mobile satellite switching centre MSSC 24 is coupled to the SBS 20 and to a satellite visitor location register $VLR_{SAT}$ 25, which maintains a record of the individual UTs 4a, 4b which are making use of the particular SBS 20. The MSSC 24 provides similar functionality to terrestrial cellular mobile switching centres in managing and controlling the routing of calls between the UT 4a, 4b and the terrestrial networks 6.

The NMC 7 includes a Satellite Resource Management Centre (SRMC) 26, which is connected to each SBS Controller 21 via a connection 27 from the backbone network 2. The SRMC 26 located at the NMC 7, and the Local SRMCs 22 and PCSs 23 located at certain SBSs, together form part of the Satellite Resource Management System (SRMS), whose functions include the generation of frequency plans for the overall satellite constellation, and managing the sharing of satellite resources among the various SBSs so as to optimise the use of the available spectrum in accordance with the instantaneous demand of all SBSs.

The SRMC 26 centrally plans, in non-real time, how the frequency, TDMA time slot and satellite power resources should be managed for optimum efficiency, based on the predicted traffic demands of the various SBSs. It analyses historical traffic data together with satellite ephemeris data, available frequencies and so on, to generate frequency plans to enable the overall satellite constellation to meet expected traffic requirements, as well as generating satellite transponder configuration plans to match the frequency plans. The SRMC 26 further determines how time slots on the planned frequencies are to be shared between the Local SRMCs 22 at each SBS. The resulting plans are known as Burst Time Frequency Plans (BTFPs) and contain pools of available TDMA time slots and frequencies.

The BTFPs are communicated to each Local SRMC 22 at each SBS 20 in non-real time. Real-time time slot allocations are then made by the Local SRMC 22 at each SBS 20 from its local pool, for use by each satellite spot beam, in response to requests from the SBS Controller 21.

The transponder configuration plans for each satellite are communicated to one nominated PCS 23 at an SBS 20 in the coverage of each satellite, from where they are uploaded to the relevant satellites.

The various functions of the SRMS system occur at very different timescales; some functions, such as the on-demand allocation of time slots, occur in real-time, in response to requests from each SBS. Other functions are best performed typically once a day, for example, the global frequency planning or the control of the satellite transponder configurations, as they require extensive information exchange between distant elements of the system.

In normal operation at low traffic levels, a UT 4a, 4b which requests the opening of a traffic channel, which is used to carry most types of voice and data traffic, is allocated appropriate radio resources by the relevant SBS 20 from its local resource pool. These resources include a specified beam on the satellite, frequency and TDMA time slot allocations, an appropriate power level for the service, together with a parameter known as a Z-arc. These resources are managed as appropriate, with, for example, provision for handover procedures to maintain the communications link when movement by the user and/or the satellites requires a different time slot, frequency, beam, Z-arc, satellite or ground station to maintain the link. The requirement for the Z-arc parameter results from the TDMA frame structure, and is explained in detail below.

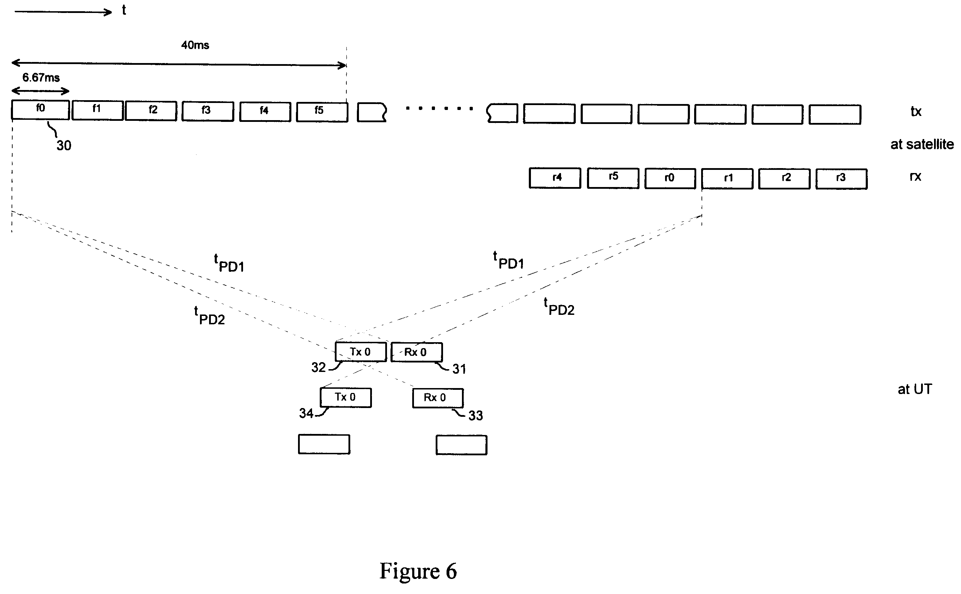

Referring to Figure 6, viewed from a satellite 3a, 3b, a traffic channel is made up of a plurality of TDMA frames, each frame comprising six time slots and lasting for 40 ms. Each time slot lasts 6.67 ms. The return path time slots r0, ..., r5 are shifted relative to the forward path time slots f0, ..., f5. The degree by which they are shifted varies in relation to the distance from the satellite nadir and the cell to which a beam is directed because of the different propagation times.

In a terrestrial cellular mobile telephone network, the signal typically takes a few microseconds to travel from a base transmitter site antenna to a mobile station and any variations are insignificant. Consequently, the TDMA time slot pattern is retained at the mobile station.

However, in a satellite mobile telephone system with the satellites 3a, 3b in a medium earth orbit, for example at 10 355km, the time taken for signals to travel between a satellite 3a, 3b and a UT 4a, 4b is longer than a time slot. In the case of a satellite orbiting at 10 355km, the one way propagation time to the nadir is approximately 34.5 ms, which is comparable with the frame duration. This situation is further complicated by there being a significant difference between the path length to the cell at the satellite's nadir and the path lengths to the cells at the edge of the satellite's footprint. For a satellite orbiting at 10 355km, the one way propagation time to a UT which sees the satellite at 0° elevation is approximately 51.6 ms. This leads to significant differences in the times at which bursts arrive at UTs and in the times when UTs are required to transmit in order for their signals to fit in with the TDMA frame structure at the satellite.

For example, a transmission burst (Tx) 30 for TDMA slot 0 at the satellite is received as Rx burst 31 by a UT 4a at a time $t_{PD1}$ later, where $t_{PD1}$ is the one-way path delay from the satellite antenna to the UT antenna. A corresponding Tx burst 32 at the UT 4a is also received at the satellite at a time $t_{PD1}$ later. If the UT 4a moves further from the satellite nadir, then the path delay $t_{PD2}$ is greater than $t_{PD1}$, so that the Rx burst 33 will be received correspondingly later relative to Rx burst 31. In order for the corresponding Tx burst 34 to reach the satellite at the same time as burst 32, it must be transmitted correspondingly earlier than burst 32 by a time $t_{offset}$, such that: $t_{PD2} - t_{offset} = t_{PD1}$.

It is evident from Figure 6 that the variation in path delays gives rise to a pyramid structure of time slots at the UT. The magnitude of the variation in path delay which results from the size of each satellite's footprint means that an uncorrected pyramid structure could result in burst overlap at the UT, as well as the inability to achieve timing synchronisation at the satellite. Although in principle forward and return links could simply transmit at nominal frequency and time, with demodulators on the links searching for and locking to signals as received, such an approach would waste both spectrum and information. Maximum efficiency in the use of the mobile spectrum requires that all forward and return link traffic channel signals in one spot beam must be nominally synchronised in timing and carrier frequency at the satellite. In relation to timing synchronisation, this means that offsets due to path delay variations on links to individual UTs need to be eliminated.

The necessary synchronisation is achieved by referencing the burst timing to one of a number of specific path delay values in each spot beam at which there is zero offset from the traffic channel frame time on Earth. Since contours of constant time delay on Earth are arc-shaped, the zero-offset arcs are known as Z-arcs.

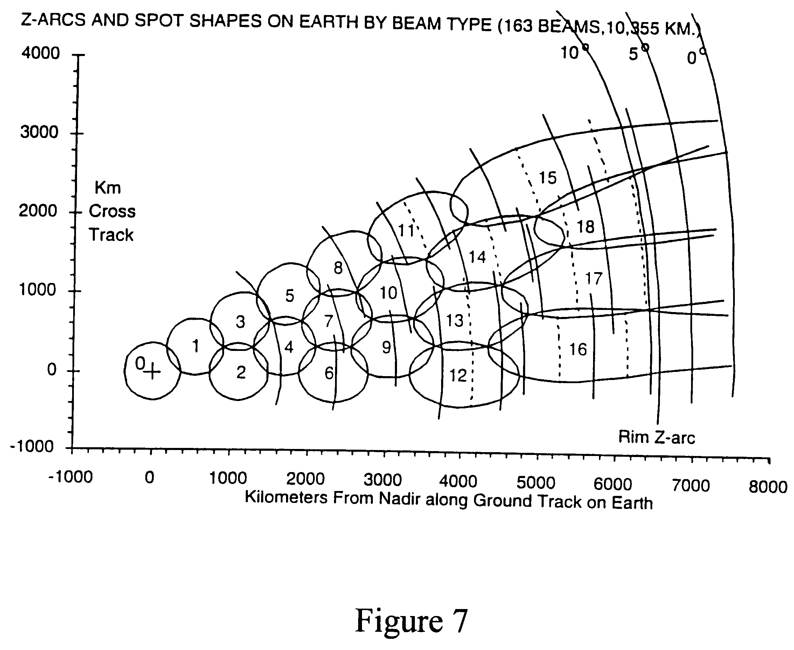

In the ICO$^{TM}$ satellite mobile telephone system, each Z-arc delay value defines a delay class which lies within +/- 1.4 ms of that value, so that 17 delay classes cover the 163 spot beams. Figure 7 shows the Z-arcs superimposed onto the beam types shown in Figure 2. Beam types 0 to 5, for example, have a path delay variation of only 2.2 ms, and are therefore covered by a single Z-arc. In beam spots with more than one delay class, dotted arcs show the boundaries between delay classes.

The TDMA frame structure is also specified by the need to minimise the mass and cost of the UTs 4a, 4b, with a radio link design which permits a UT to operate half-duplex on the RF link ie. with non-overlapping transmit and receive burst timings and a small guard time, for example 0.533 ms, for transmit-receive switching and local oscillator re-tuning. Further, to allow implementation of diversity, the UTs are capable of transmitting two 6.667 ms TDMA bursts and receiving two 6.667 ms TDMA bursts in each 40 ms frame period.

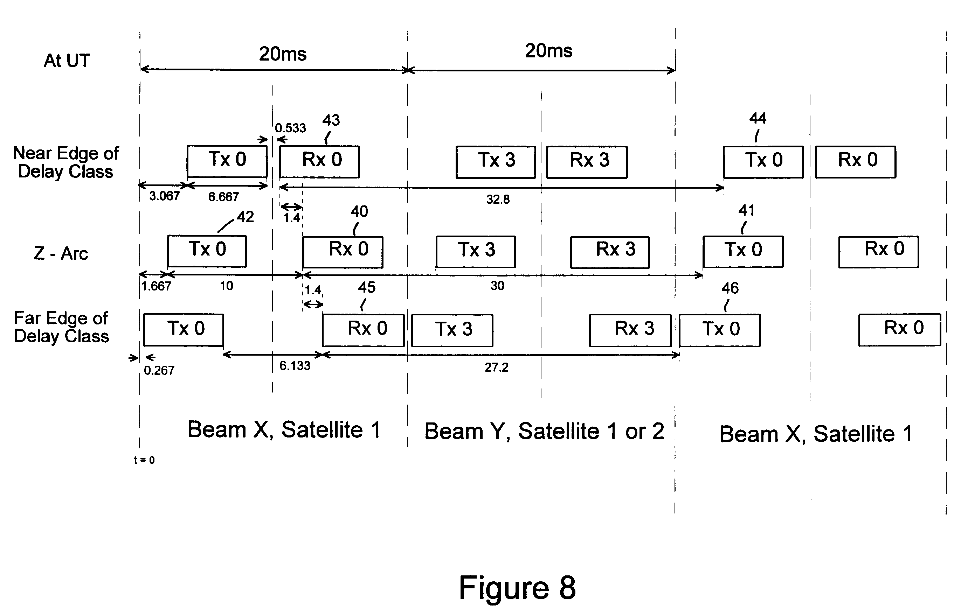

Figure 8 shows the frame structure at a UT for an arbitrary delay class. The requirements of half-duplex operation, diversity and close time synchronisation at the satellite can all be met if the transmit burst for TDMA slot N (N = 0 to 5) follows the receive burst for TDMA slot N by 4.5 slots (30 ms). Each 40 ms frame is made up of two 20 ms diversity windows. The burst timings at the Earth and the satellite are explained relative to the frame timing on Earth to which they are referenced.

Figure 8 illustrates that the transmit and receive bursts remain at least 0.267 ms inside the 20 ms diversity window and retain at least a 0.533 ms separation from each other, even when the UT moves away from the Z-arc, so that, within each delay class, the one-way path delay varies up to + /- 1.4 ms from the Z-arc value.

On the Z-arc, Rx burst 40 is received 11.667 ms after the start of the window and corresponds to a Tx burst initiated at the satellite at 11.667 - PD$_{MID}$, where PD$_{MID}$ is the Z-arc value ie. the path delay from the satellite to a UT located at the Z-arc. In response to the Rx burst 40, a Tx burst 41 is initiated 4.5 slots (30 ms) later.

Since slot timing is modulo 40 ms, this is equivalent to the receive burst following the transmit burst by 1.5 slots (10 ms), which explains the existence of Tx burst 42 within the same diversity window as Rx burst 40. However, operationally, transmit must follow receive because time and frequency references come from the receive burst. Tx burst 42 is received at the satellite at a time 1.667 + PD$_{MID}$.

Considering the situation where the UT lies on the near edge of the delay class, namely the edge nearer the nadir, the Rx burst 43 is received 1.4 ms before Rx burst 40. To ensure that the corresponding Tx burst 44 arrives at the satellite at the same time as Tx burst 41, Tx burst 44 is sent 32.8 ms after Rx burst 43. This represents a delay of 4.5 slots plus a correction of 2.8 ms (2 * 1.4 ms) to compensate for the shorter two-way path delay.

Similarly, where the UT lies on the far edge of the delay class, Rx burst 45 is received 1.4 ms after Rx burst 40. The corresponding Tx burst 46 is therefore sent 27.2 ms later, being 4.5 slots less a correction of 2.8 ms to compensate for the longer two-way path delay.

Where the UT lies in any other position within the delay class, the appropriate offset for Tx burst timing can be obtained by calculating the difference between the actual path delay to the UT and the known Z-arc value representing the delay class to which the UT is allocated. The UT merely adds or subtracts twice this difference (for the two-way path delay) from the basic 4.5 slot (30 ms) delay after the Tx burst is received.

Conveniently, this offset, which has a maximum value of + /- 2.8 ms, can be calculated by the SBS 20 and periodically sent to the UT 4a, 4b. The SBS 20 knows the Z-arc value corresponding to the delay class to which the UT 4a, 4b has been allocated. It can determine its own delay to a satellite 3a, 3b by sending and receiving loop-back transmissions. Other delays within the system can be measured or details obtained from the relevant equipment manufacturer, for example, in the case of transponder delays, from the satellite manufacturer, and this information supplied to the SBS 20. Since the SBS 20 knows the various offsets applied by the UT between the Rx and Tx burst, it can then use a received burst from the UT to calculate the actual path delay to the UT.

Since time slot 3 in the TDMA structure occurs 20 ms after slot 0, it can be seen that the slot 3 Tx and Rx bursts fit within a 20 ms diversity window contiguous with the first window. The same UT can therefore simultaneously use TDMA slot 3 for a diversity link via a second spot beam, either via the same satellite for make-before-break beam handover, or via a second satellite.

Similar frame structures can be produced for paired slots 1 and 4, and 2 and 5, which are delayed from slot 0 by the appropriate multiple of slot length.

The way in which a UT is allocated a traffic channel is described below.

A UT 4a, 4b first acquires system time and frequency from a high power Control Channel (Broadcast Control Channel - BCCH) carrying Broadcast Network information. The BCCH channel is transmitted using a different carrier frequency to the traffic channels and operates at, for example, + 4.5 dB compared to the nominal power for a traffic channel. This acquisition involves using, for example, power-profile analysis on the BCCH signal.

To initiate radio access, the UT 4a, 4b transmits a formatted burst in a prescribed time slot on a prescribed random access channel (RACH) carrier frequency. There are RACH frequencies in every spot beam of every satellite. The relevant SBS searches for and acquires the UT RACH burst timing. As explained above, knowing the received RACH time and various fixed offsets, the SBS can work out the actual path delay between the satellite and the UT and therefore decide which Z-arc the UT should use, if the beam has more than one. The SBS Controller 21 requests resources for the UT from the local resource pool maintained by its Local SRMC 22. The assignment of a traffic channel and initial pre-corrections are sent to the UT on an access grant channel (AGCH).

During the traffic exchange, the SBS 20 pre-corrects the forward-link frame timing of the Tx bursts at the satellite to achieve zero frame timing offset on Earth along the Z-arc. The UT locks to the corresponding received Rx burst timing and pre-corrects and transmits its return-link Tx burst 4.5 slots + /- up to 2.8 ms later so as to maintain nominally zero timing at the satellite. The SBS 20 periodically, for example, once per minute, sends new timing offsets to the UT, based on continuing measurement of return-link burst timing.

When the UT reaches the edge of a delay class, it is notified by the SBS to hand over to a new delay class. Referring to Figure 7, in central beams a UT can remain in the same delay class through seven beam handovers, while in edge beams a UT can remain in the same beam for three delay-class handovers.

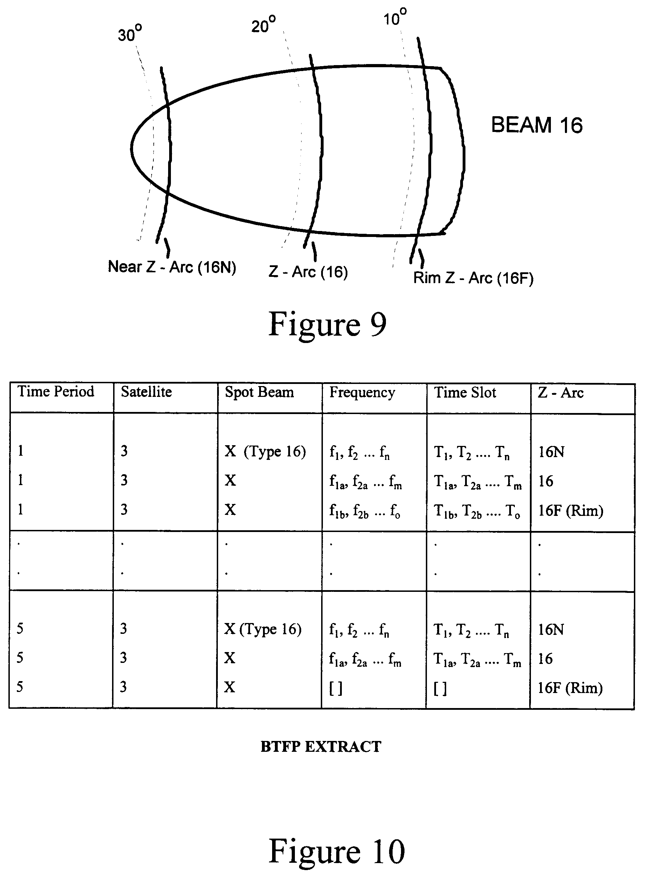

In accordance with the invention, the availability of a number of Z-arcs in the edge beams permits their use in the allocation of radio resources, since the position of the Z-arcs corresponds to different angles of elevation. Referring to Figure 9, which represents edge beam 16, there are three Z-arcs: the rim Z-arc at an elevation of approximately 8°, a Z-arc at an approximate elevation of 18° and a Z-arc at an approximate elevation of 28°. If the traffic forecast indicates that a particular satellite will be heavily loaded at a particular time, it is convenient to deny resources to UTs lying within +/-1.4 ms of a particular Z-arc. For example, if the traffic forecast indicates that full loading will be achieved for traffic handled above 10° elevation, UTs lying in a delay class defined by the rim Z-arc are denied resources, while resources are provided to UTs in beam 16 lying on the 18° and 28° Z-arcs.

The way in which this denial is achieved is by grouping resources within the BTFP produced by the SRMC on a Z-arc by Z-arc basis. For example, referring to the simplified BTFP extract in Figure 10, at a time period 1, the traffic prediction for an arbitrary satellite 3, in an edge spot-beam X of beam type 16, is for low loading, so time slot and frequency resources are available for all three Z-arcs. However, at time period 5 some time later, the traffic prediction is much heavier, so that the SRMC calculates that allocating resources to all UTs would cause a power overload at satellite 3. It further calculates that the power requirements will be within limits only when traffic below 10° elevation is excluded. Since a 10° elevation lies with the delay class defined by the rim Z-arc, no resources appear in the frequency and time slot columns for that Z-arc.

When a UT requests a traffic channel to be allocated, the SBS Controller 21 demands resources from its Local SRMC 22, specifying the UT by satellite, spot beam and Z-arc. For Z-arcs other than the rim Z-arc, the Local SRMC 22 contains both available frequencies and time slots, from which the SBS Controller 21 makes a selection to form a traffic channel. The details of the selected traffic channel are sent to the UT.

When the UT has been allocated to the rim Z-arc, the Local SRMC 22 indicates that no resources are available for that UT, and the SBS Controller 21 in turn sends an AGCH message to the UT indicating that a traffic channel will not be allocated to it. At this point, a handover procedure will be implemented to allocate the UTs which have been denied resources to another satellite.

It will be understood that although selective denial or selective allocation of resources has been described in relation to delay Z-arcs, it is possible to use any parameter which is capable of dividing a spot beam into two or more classes or layers referenced to different elevations.

**Claims**

1. A method of allocating radio resources to a plurality of mobile user terminals in a satellite mobile telephone system, in which a position of each of the user terminals within the footprint of a given satellite is capable of being classified by reference to one of a plurality of predetermined reference values, each of which represents a path delay for a signal from the given satellite to a point on the Earth's surface, and wherein each reference value is capable of being associated with radio resources to be used by user terminals referenced to that value, comprising selectively denying resources to particular reference values.

2. A method according to claim 1, wherein resources are denied to reference values representing user terminals at a low elevation with respect to the given satellite.

3. A method according to claim 2, comprising determining the elevation level below which resources are to be denied to said reference values by predicting traffic demands for the given satellite.

4. A method according to any preceding claim, comprising denying resources to all of the reference values associated with a single satellite beam.

5. A method of allocating radio resources to a plurality of mobile user terminals in a satellite mobile telephone system, in which a position of each of the user terminals within the footprint of a given satellite is capable of being classified by reference to one of a plurality of predetermined reference values, each of which represents a path delay of a signal from the given satellite to a point on the Earth's surface, and wherein each reference value is capable of being associated with radio resources to be used by user terminals referenced to that value, comprising selectively allocating resources to particular reference values.

6. A method according to any preceding claim, wherein the predetermined reference values are Z-arc values.

7. A method according to claim 6, wherein the position of a user terminal is classified within a delay class defined by a Z-arc value.

8. A method according to any preceding claim, wherein the radio resources comprise traffic channels.

9. A method according to claim 8, wherein a traffic channel comprises a carrier frequency and a TDMA time slot allocation.

10. A method according to any preceding claim, further comprising producing a burst time frequency plan including said reference values and their associated radio resources.

11. A method according to claim 10, including receiving system information to enable production of the burst time frequency plan.

12. A method according to claim 11, wherein the system information includes historical traffic data.

13. A method according to claim 11 or 12, wherein the system information includes satellite ephemeris data.

14. A method of allocating radio resources to a plurality of mobile user terminals in a satellite mobile telephone system from a burst time frequency plan produced in accordance with any one of claims 10 to 13, comprising, in response to a request for resources from a user terminal, determining the reference value to which the user terminal is to be referenced, selecting from among the resources specified in the burst time frequency plan as being associated with the reference value, and transmitting a signal to the user terminal allocating the selected resources.

15. A method according to claim 14, wherein the signal informs the user terminal that no resources are available.

16. A satellite mobile telephone system comprising:

a plurality of orbiting satellites;
a plurality of user terminals;
means for classifying the position of each of the user terminals by reference to one of a plurality of predetermined reference values, each of which represents a path delay for a signal from a given satellite to a point on the Earth's surface; and means for selectively allocating radio resources to each user terminal according to the reference value by which it is classified.

17. A satellite mobile telephone system comprising:

a plurality of orbiting satellites;
a plurality of user terminals;
means for classifying the position of each of the user terminals by reference to one of a plurality of predetermined reference values, each of which represents a path delay for a signal from a given satellite to a point on the Earth's surface; and means for selectively denying radio resources to each user terminal according to the reference value by which it is classified.

Figure 1

Figure 2

BEAM TYPES, SPOT SHAPES, AND SIZES ON EARTH (163 BEAMS,10.355 KM.)

Figure 3

UT 4

Figure 4

Figure 5

EP 0 935 351 A1

Figure 6

Z-ARCS AND SPOT SHAPES ON EARTH BY BEAM TYPE (163 BEAMS, 10,355 KM.)

Figure 7

EP 0 935 351 A1

At UT

20ms 20ms

Near Edge of
Delay Class

0.533 43

| Tx 0 | Rx 0 | Tx 3 | Rx 3 | Tx 0 | Rx 0 |

44

3.067 6.667 32.8

1.4

Z - Arc

42 40 41

| Tx 0 | Rx 0 | Tx 3 | Rx 3 | Tx 0 | Rx 0 |

1.667 10 30 46

1.4 45

Far Edge of
Delay Class

| Tx 0 | Rx 0 | Tx 3 | Rx 3 | Tx 0 | Rx 0 |

0.267 6.133 27.2

Beam X, Satellite 1 | Beam Y, Satellite 1 or 2 | Beam X, Satellite 1

t = 0

Figure 8

Figure 9

| Time Period | Satellite | Spot Beam | Frequency | Time Slot | Z - Arc |
|---|---|---|---|---|---|
| 1 | 3 | X (Type 16) | $f_1, f_2 \ldots f_n$ | $T_1, T_2 \ldots T_n$ | 16N |
| 1 | 3 | X | $f_{1a}, f_{2a} \ldots f_m$ | $T_{1a}, T_{2a} \ldots T_m$ | 16 |
| 1 | 3 | X | $f_{1b}, f_{2b} \ldots f_o$ | $T_{1b}, T_{2b} \ldots T_o$ | 16F (Rim) |
| . | . | . | . | . | . |
| . | . | . | . | . | . |
| 5 | 3 | X (Type 16) | $f_1, f_2 \ldots f_n$ | $T_1, T_2 \ldots T_n$ | 16N |
| 5 | 3 | X | $f_{1a}, f_{2a} \ldots f_m$ | $T_{1a}, T_{2a} \ldots T_m$ | 16 |
| 5 | 3 | X | [ ] | [ ] | 16F (Rim) |

BTFP EXTRACT

Figure 10

EP 0 935 351 A1

European Patent Office

**EUROPEAN SEARCH REPORT**

Application Number

EP 98 30 0667

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 96 10872 A (MOTOROLA) 11 April 1996<br><br>* claims 1-10 * | 1,5,16, 17 | H04B7/185 |
| A | EP 0 780 997 A (TRW) 25 June 1997<br><br>* column 1, line 52 - column 2, line 41 * | 1,5,16, 17 | |
| A | EP 0 748 061 A (GLOBALSTAR) 11 December 1996<br>* claims 1-32 * | 1,5,16, 17 | |
| A | BRANKO BJELEJAC: "CIR BASED DYNAMIC CHANNEL ALLOCATION SCHEMES AND HANDOVER PRIORISATION FOR MOBILE SATELLITE SYSTEMS" 1996 IEEE 46TH. VEHICULAR TECHNOLOGY CONFERENCE, MOBILE TECHNOLOGY FOR THE HUMAN RACE ATLANTA, APR. 28 - MAY 1, 1996, vol. 2, no. CONF. 46, 28 April 1996, INSTITUTE OF ELECTRICAL AND ELECTRONICS ENGINEERS, pages 948-952, XP000593111<br>* page 948, right-hand column, line 5 - page 950, right-hand column, line 15 * | 1,5,16, 17 | TECHNICAL FIELDS SEARCHED (Int.Cl.6)<br><br>H04B |

The present search report has been drawn up for all claims

| Place of search | Date of completion of the search | Examiner |
|---|---|---|
| THE HAGUE | 12 June 1998 | Bischof, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)